# EUROPEAN PATENT SPECIFICATION

(11) **EP 2 418 303 B1**
(45) Date of publication and mention of the grant of the patent: **22.11.2017**
(21) Application number: 10758930.1
(22) Date of filing: 31.03.2010
(51) Int. Cl.: C23C 22/60, C09D 7/12, C09D 5/08

(54) **ZINC-COATED STEEL SHEET**
ZINKBESCHICHTETES STAHLBLECH
FEUILLE D'ACIER REVÊTUE DE ZINC

(30) Priority: 31.03.2009 JP 2009088263; 25.03.2010 JP 2010070873
(43) Date of publication of application: 15.02.2012
(73) Proprietor: JFE Steel Corporation, Tokyo, 100-0011 (JP)
(72) Inventor: MATSUDA, Takeshi, Tokyo 100-0011 (JP); MATSUZAKI, Akira, Tokyo 100-0011 (JP); SASAKI, Masato, Tokyo 100-0011 (JP); TAKASHIMA, Katsutoshi, Tokyo 100-0011 (JP)
(74) Representative: Grünecker Patent- und Rechtsanwälte PartG mbB
(86) International application number: PCT/JP2010/056278
(87) International publication number: WO 2010/114170

(56) References cited:
- JP-A- 2002 030 459
- JP-A- 2004 143 549
- JP-A- 2005 194 627
- JP-A- 2006 022 370
- JP-A- 2006 321 957
- JP-A- 2007 177 314
- JP-A- 2007 177 314
- JP-A- 2008 081 785
- JP-A- 2008 169 470
- JP-A- 2008 274 388
- US-A1- 2004 167 266

## Description

### [Technical Field]

The present invention relates to an environmentally friendly zinc or zinc alloy coated steel sheet that is used for automobiles, household electrical appliances, building materials, and the like and that is surface-treated such that a surface-treatment film formed on a surface of the zinc or zinc alloy coated steel sheet is completely free from regulated substances causing pollution such as hexavalent chromium; in particular, to a zinc or zinc alloy coated steel sheet that is suitable for applications relating to electric and electronic devices and the like in which electromagnetic interference (EMI) needs to be suppressed, that has excellent electromagnetic shielding characteristics, and that also has excellent corrosion resistance.

### [Background Art]

With recent trends toward digitization of household electrical appliances, an increase in the speed of CPUs, and the like, issues relating to hazard of electromagnetic radiation to devices and human bodies around such appliances and CPUs have been attracting attention. To address the issues, "The Voluntary Control Council for Interference by Information Technology Equipment (VCCI)" was established in Japan. To comply with the rules of VCCI, there has been an increasingly strong trend in the industry toward voluntary control in terms of the issues relating to hazard of electromagnetic radiation. To address electromagnetic noise from electronic boards and the like within electric and electronic devices, for example, there is a technique of surrounding the electronic boards and the like with shield boxes composed of metal (electrically conductive) materials to achieve electromagnetic shielding.

In such a shield box, the electrically conductive material forming the shield box reflects electromagnetic waves to thereby achieve electromagnetic shielding. The higher the electrical conductivity of a material forming a shield box, the higher the electromagnetic wave reflectivity becomes and the better the electromagnetic shielding property becomes. Accordingly, to ensure the electromagnetic shielding property of a shield box, it is important that metal plates forming the shield box have high electrical conductivity.

Such a shield box is produced by forming metal plates into the shape and hence has discontinuous portions (joints and joining portions). Leakage or entry of electromagnetic waves tends to occur through such discontinuous portions. Accordingly, to suppress leakage and entry of electromagnetic waves, electrically conductive gaskets are generally inserted in the discontinuous portions of shield boxes.

To enhance the shielding property of a shield box, the shield box needs to have a structure in which desired current can be passed through the entirety of the shield box. However, such portions where metal members and gaskets are in contact with each other generally have a low contact pressure and hence have poor electrical continuity (hereafter, simply referred to as "continuity") between the metal members and gaskets. Thus, the amount of current passing through the contact portions tends to become small. Accordingly, to further enhance the performance of a shield box, it is important to ensure electrical conductivity of metal plates forming the shield box and to ensure continuity between the metal plates and gaskets.

Since electric and electronic devices are used in various environments, materials forming shield boxes are required not to corrode in usage in severe environments, that is, to have excellent corrosion resistance. Steel sheets obtained by subjecting surfaces of zinc or zinc alloy coated steel sheets to a chromate treatment with a treatment solution mainly containing chromic acid, dichromic acid, or a salt of the foregoing for the purpose of enhancing corrosion resistance (white-rust resistance and red-rust resistance) are widely used as steel sheets for household electrical appliances, steel sheets for building materials, and steel sheets for automobiles.

As described above, metal members (steel sheets) forming shield boxes need to have high electrical conductivity and to allow for continuity between the metal members and gaskets. Although films formed on surfaces of steel sheets by a chromate treatment have lower electrical conductivity than the base steel sheets, films formed by a chromate treatment can exhibit rust resistance even when the films have a small thickness. Accordingly, in surface-treated steel sheets subjected to a chromate treatment, by forming films having low electrical conductivity so as to have a minimum thickness, electrical conductivity equivalent to that of steel sheets (not surface-treated) is achieved. As a result, continuity between the sheets and the gaskets can be sufficiently ensured and hence both rust resistance and electromagnetic shielding can be achieved. However, due to recent global environmental issues, there is an increasing demand for employment of pollution-free surface-treated steel sheets provided without using a chromate treatment, that is, chromium-free treated steel sheets.

A large number of techniques relating to chromium-free treated steel sheets have been developed: for example, techniques of using the passivation effect of molybdic acid and tungstic acid belonging to group IVA as with chromic acid; techniques of using metal salts of transition metals such as Ti, Zr, V, Mn, Ni and Co and rare-earth elements such as La and Ce; techniques based on chelating agents such as polyhydric phenolcarboxylic acid such as tannic acid and S- or N-containing compounds; techniques of forming polysiloxane films with silane coupling agents; and techniques in combination of the foregoing.

Specific examples are as follows:
(1) a technique of forming a film with a treatment solution containing a coating agent obtained by reaction between an organic resin such as a polyvinylphenol derivative, an acid component, and an epoxy compound, a silane coupling agent, a vanadium compound, and the like (for example, Patent Literatures 1, 2, 3, and 4),
(2) a technique of forming a film containing an aqueous resin, a thiocarbonyl group, a vanadate compound, and phosphoric acid (for example, Patent Literature 5),
(3) a technique of forming a film with a treatment solution containing a compound of a metal such as Ti, an inorganic acid such as a fluoride or a phosphate compound, and an organic acid (Patent Literatures 6, 7, 8, 9, 10, 11, and 12),
(4) a technique in which a composite film containing a rare-earth element such as Ce, La, or Y and the Ti or Zr element, a layer having a high oxide content is formed in a region of the film closer to the interface between the film and the coated layer, and a layer having a high hydroxide content is formed in a region of the film closer to the front surface (Patent Literature 13); and a technique of forming a composite film composed of Ce and a Si oxide (Patent Literature 14),
(5) a technique of forming an organic composite coating constituted by a lower layer that is a phosphoric acid and/or phosphate compound film containing an oxide and an upper layer that is a resin film (for example, Patent Literatures 15 and 16), and
(6) a technique of forming a composite film composed of a specific inhibitor component and a silica/zirconium compound (for example, Patent Literature 17).

The films formed by these techniques are intended to suppress generation of white rust of zinc by composite addition of organic components or inorganic components. For example, in the techniques (1) and (2), corrosion resistance is ensured by mainly adding organic resins. However, in a film containing such organic resins, the organic resins have an insulating property. Accordingly, a steel sheet having such a film does not have sufficient electrical conductivity and hence is not suitable as the material of a shield box.

The techniques (3) and (4) provide films that are completely free from organic components and are composed of inorganic components only. However, such a composite film composed of a metal oxide and a metal hydroxide needs to have a large thickness to impart sufficient corrosion resistance to a zinc or zinc alloy coated steel sheet. In addition, a surface of a zinc or zinc alloy coated steel sheet is covered with a nonconductive film (insulating film) composed of zinc phosphate or the like. Accordingly, as in the techniques (1) and (2), high electrical conductivity is less likely to be achieved and it is difficult to achieve both corrosion resistance and electrical conductivity.

In the technique (5), since the electrical conductivity of a surface of a surface-treated steel sheet depends on the thickness of an insulating film formed on the surface, the insulating film is formed so as to have a small thickness to thereby achieve good electrical conductivity. However, a decrease in the film thickness results in degradation of corrosion resistance of the steel sheet. Accordingly, it is difficult to provide a surface-treated steel sheet that is excellent in terms of both corrosion resistance and electrical conductivity.

The technique (6) provides excellent corrosion resistance by using the passivation effect of a vanadate compound serving as an inhibitor component and a sparingly soluble metal salt from a phosphate compound serving as an inhibitor component, and by forming a composite film containing a zirconium compound, silica fine particles, and a silane coupling agent that form the skeleton of the film. However, to ensure electrical conductivity, the film thickness needs to be small. Accordingly, it is difficult to achieve both corrosion resistance and electrical conductivity.

As described above, to make the chromium-free treated steel sheet having been developed so far have corrosion resistance equivalent to that of existing chromate films, films having a high insulating property need to be formed so as to have a large thickness. Accordingly, it is difficult for such chromium-free treated steel sheets to have sufficiently high electrical conductivity. Thus, these steel sheets do not sufficiently satisfy characteristics required for steel sheets forming shield box bodies. In addition, as described above, to enhance the shielding property of a shield box, sufficiently high continuity needs to be achieved between metal members (steel sheets) and gaskets that are in contact with each other at a low contact pressure. However, such continuity is not considered at all in any of the above-described techniques.

### [Citation List]

### [Patent Literature]

PTL 1: Japanese Unexamined Patent Application Publication No. 2003-13252
PTL 2: Japanese Unexamined Patent Application Publication No. 2001-181860
PTL 3: Japanese Unexamined Patent Application Publication No. 2004-263252
PTL 4: Japanese Unexamined Patent Application Publication No. 2003-155452
PTL 5: Japanese Patent No. 3549455
PTL 6: Japanese Patent No. 3302677
PTL 7: Japanese Unexamined Patent Application Publication No. 2002-105658
PTL 8: Japanese Unexamined Patent Application Publication No. 2004-183015
PTL 9: Japanese Unexamined Patent Application Publication No. 2003-171778
PTL 10: Japanese Unexamined Patent Application Publication No. 2001-271175
PTL 11: Japanese Unexamined Patent Application Publication No. 2006-213958
PTL 12: Japanese Unexamined Patent Application Publication No. 2005-48199
PTL 13: Japanese Unexamined Patent Application Publication No. 2001-234358
PTL 14: Japanese Patent No. 3596665
PTL 15: Japanese Unexamined Patent Application Publication No. 2002-53980
PTL 16: Japanese Unexamined Patent Application Publication No. 2002-53979
PTL 17: Japanese Unexamined Patent Application Publication No. 2008-169470

JP2007177314 discloses a relevant example 11 in Table 2: Therein the used silane coupling agent (a-1) is A-1-1: Sila-Ace S-510 (3-glycidoxy propyl trimethoxysilane; the product made by a Chisso corporation);The used alkoxysilane oligomer (a-2) is A-2-1: MKC silicate MS51(The partial-hydrolysis condensate of the tetramethoxy silane, the average degree of polymerization 5, content of less than 0.2 mass % of a monomer component; Mitsubishi Chemical Corp. make); the supply source of the used phosphate ion (b) is B1: diammonium hydrogenphosphate (made by the Wako Pure Chemical Industries company); The supply source of the used fluoride ion (c) is C2: Hexafluoro zirconic acid (H2ZrF6; the Morita chemical industry company make) and the used metallic compound (d) is D1: vanadyl (Acetylacetone vanadyl; Nihon Kagaku Sangyo Co., Ltd. make).The a-1/a-2 is 50:50 and the amounts of B1: 13.9, C2: 36.4, D1: 15. Wherein C2 is the Zr-compound. Acetic acid maybe added that functions as the chelating agent.

### [Summary of Invention]

### [Technical Problem]

An object of the present invention is to provide a zinc or zinc alloy coated steel sheet having a surface-treatment film on a zinc or zinc alloy coated surface, the surface-treatment film overcoming the above-described problems, being completely free from regulated substances causing pollution such as hexavalent chromium, having various properties such as corrosion resistance and adhesion, and allowing for excellent continuity without degrading corrosion resistance even under a severe condition in which the steel sheet is in contact with a gasket or the like at a low contact pressure.

### [Solution to Problem]

The inventors of the present invention have performed thorough studies on how to overcome the problems. As a result, the inventors have found that the problems can be overcome by using an alkaline surface-treatment agent containing a water-soluble zirconium compound, a tetraalkoxysilane, an epoxy-group-containing compound, a chelating agent, a vanadate compound, a metal compound, and the like. Thus, the present invention has been accomplished.

Specifically, the present invention provides the following (1) to (5).
1) A zinc or zinc alloy coated steel sheet including a surface-treatment film having a coating weight of 50 to 1200 mg/m² relative to a surface of the zinc or zinc alloy coated steel sheet, wherein the surface-treatment film is obtained by applying a surface-treatment agent to the surface of the zinc or zinc alloy coated steel sheet and drying the surface-treatment agent by heating; and the surface-treatment agent is prepared so as to contain a water-soluble zirconium compound (A), a tetraalkoxysilane (B), an epoxy-group-containing compound (C), a chelating agent (D), a vanadate compound (E), and a metal compound (F) containing one or more metals selected from the group consisting of Ti, Al, and Zn, to have a pH of 8 to 10, and to satisfy conditions (I) to (V) below,
   Note
   (I) a ratio (A/B) of a mass of the water-soluble zirconium compound (A) in terms of Zr to a mass of the tetraalkoxysilane (B) is 1.0 to 6.0;
   (II) a ratio (B/C) of the mass of the tetraalkoxysilane (B) to a mass of the epoxy-group-containing compound (C) is 0.1 to 1.6;
   (III) a ratio (B/D) of the mass of the tetraalkoxysilane (B) to a mass of the chelating agent (D) is 0.3 to 2.0;
   (IV) a ratio (E/D) of a mass of the vanadate compound (E) in terms of V to the mass of the chelating agent (D) is 0.03 to 1.0; and
   (V) a ratio (F/D) of a total metal mass of the metal compound (F) to the mass of the chelating agent (D) is 0.05 to 0.8.
   Note that, in the formulae representing the mass ratios, A represents the mass of the water-soluble zirconium compound (A) in terms of Zr; B represents the mass of the tetraalkoxysilane (B); C represents the mass of the epoxy-group-containing compound (C); D represents the mass of the chelating agent (D); E represents the mass of the vanadate compound (E) in terms of V; and F represents the total metal mass of the metal compound (F). These definitions will also be used below.
(2) The zinc or zinc alloy coated steel sheet according to (1), wherein the coating weight relative to the surface is 50 to 500 mg/m².
(3) The zinc or zinc alloy coated steel sheet according to (1) or (2), wherein the surface-treatment agent further contains a lubricant (G) and a content of the lubricant (G) is 1 to 10 mass% relative to a total solid content of the surface-treatment agent.
(4) The zinc or zinc alloy coated steel sheet according to any one of (1) to (3), wherein the surface-treatment agent further contains a nonionic acrylic resin emulsion (H) and a content of the nonionic acrylic resin emulsion (H) is 0.5 to 45.0 mass% relative to a total solid content of the surface-treatment agent.
(5) The zinc or zinc alloy coated steel sheet according to (4), wherein the content of the nonionic acrylic resin emulsion (H) is 0.5 to 4.5 mass% relative to the total solid content of the surface-treatment agent.

### [Advantageous Effects of Invention]

According to the present invention, a zinc or zinc alloy coated steel sheet can be provided that has various properties such as corrosion resistance and adhesion and allows for excellent continuity without degrading corrosion resistance even under a severe condition in which the steel sheet is in contact with a gasket or the like at a low contact pressure.

### [Description of Embodiments]

Hereinafter, the present invention will be described in detail.

A zinc or zinc alloy coated steel sheet according to the present invention will be first described.

Non-limiting examples of a zinc or zinc alloy coated steel sheet according to the present invention include a hot dip galvanized steel sheet (GI), a hot dip galvannealed steel sheet (GA) that is obtained by alloying the hot dip galvanized steel sheet (GI), a hot dip Zn-5 mass% Al alloy-coated steel sheet (GF), a hot dip Zn-55 mass% Al alloy-coated steel sheet (GL), an electrogalvanized steel sheet (EG), and a Zn-Ni alloy electrogalvanized steel sheet (Zn-11 mass% Ni).

A zinc or zinc alloy coated steel sheet according to the present invention is excellent in terms of continuity and includes a film having a coating weight of 50 to 1200 mg/m² relative to a surface of the zinc or zinc alloy coated steel sheet, wherein the film is obtained by applying a surface-treatment agent to the surface of the zinc or zinc alloy coated steel sheet and drying the surface-treatment agent by heating; and the surface-treatment agent is prepared so as to contain a water-soluble zirconium compound (A), a tetraalkoxysilane (B), an epoxy-group-containing compound (C), a chelating agent (D), a vanadate compound (E), and a metal compound (F) containing one or more metals selected from the group consisting of Ti, Al, and Zn.

Hereinafter, a surface-treatment agent used in the present invention will be described.

A surface-treatment agent used in the present invention contains a water-soluble zirconium compound (A). When a surface-treatment film is formed on a surface of a zinc or zinc alloy coated steel sheet with a surface-treatment agent containing a water-soluble zirconium compound, a zinc or zinc alloy coated steel sheet is provided that is excellent in terms of various properties such as corrosion resistance of the steel sheet, adhesion of the formed film, and corrosion resistance of the steel sheet after alkaline degreasing, and is excellent in terms of heat resistance and weldability, which are characteristics of inorganic films.

A water-soluble zirconium compound (A) used in the present invention is not particularly limited and examples thereof include zirconium nitrate, zirconium oxynitrate, zirconyl acetate, zirconyl sulfate, zirconium carbonate, ammonium zirconyl carbonate, potassium zirconyl carbonate, sodium zirconyl carbonate, and zircon hydrofluoric acid. One or more of these examples may be used. In particular, ammonium zirconyl carbonate and sodium zirconyl carbonate are preferred because a zinc or zinc alloy coated steel sheet more excellent in terms of corrosion resistance and continuity is provided.

A surface-treatment agent used in the present invention contains a tetraalkoxysilane (B). When a film is formed on a surface of a zinc or zinc alloy coated steel sheet with a surface-treatment agent containing the water-soluble zirconium and a tetraalkoxysilane, a zinc or zinc alloy coated steel sheet is provided that is excellent in terms of various properties such as corrosion resistance of the steel sheet, adhesion of the formed film, and corrosion resistance of the steel sheet after alkaline degreasing, and is excellent in terms of heat resistance and weldability, which are characteristics of inorganic films. The reason why such excellent characteristics are provided is not clear. But, the characteristics are probably provided because, when the tetraalkoxysilane (B) and the above-described water-soluble zirconium (A) are used in combination, the water-soluble zirconium (A) and the tetraalkoxysilane (B) form a film having three-dimensional crosslinking.

A tetraalkoxysilane (B) used in the present invention is not particularly limited as long as it has four alkoxy groups in a single molecule. Examples of the tetraalkoxysilane (B) include tetramethoxysilane, tetraethoxysilane, tetrapropoxysilane, and tetrabutoxysilane. One or more of these examples may be used. Such an alkoxy group is not particularly limited and may be, for example, an alkoxy group having 1 to 4 carbon atoms, preferably 1 to 3 carbon atoms, more preferably 1 to 2 carbon atoms. Specifically, in view of providing a zinc or zinc alloy coated steel sheet having more excellent corrosion resistance, tetraethoxysilane and tetramethoxysilane are preferable.

A surface-treatment agent according to the present invention contains the water-soluble zirconium (A) and the tetraalkoxysilane (B) such that a ratio (A/B) of the mass of the water-soluble zirconium (A) in terms of Zr to the mass of the tetraalkoxysilane (B) is 1.0 to 6.0, preferably 1.6 to 3.1. When the mass ratio is less than 1.0, a zinc or zinc alloy coated steel sheet having excellent corrosion resistance is not provided. When the mass ratio is more than 6.0, the zinc or zinc alloy coated steel sheet exhibits poor continuity.

A surface-treatment agent used in the present invention contains an epoxy-group-containing compound (C). When a film is formed on a surface of a zinc or zinc alloy coated steel sheet with a surface-treatment agent containing the water-soluble zirconium, the tetraalkoxysilane, and the epoxy-group-containing compound (C), a zinc or zinc alloy coated steel sheet is provided that is excellent in terms of various properties such as corrosion resistance of the steel sheet and corrosion resistance of the steel sheet after alkaline degreasing; and the film formed on the surface of the zinc or zinc alloy coated steel sheet is excellent in terms of adhesion, resistance to scratching, and lubricity.

An epoxy-group-containing compound (C) used in the present invention is not particularly limited and examples thereof include an epoxy-group-containing silane coupling agent such as γ-glycidoxypropyltrimethoxysilane, γ-glycidoxypropylmethyldiethoxysilane, or γ-glycidoxypropyltriethoxysilane; an epoxy-group-containing ester compound such as diglycidyl adipate, diglycidyl phthalate, and diglycidyl terephthalate; and an epoxy-containing ether compound such as sorbitol polyglycidyl ether, sorbitan polyglycidyl ether, polyglycerol polyglycidyl ether, pentaerythritol polyglycidyl ether, diglycerol polyglycidyl ether, glycerol polyglycidyl ether, trimethylpropane polyglycidyl ether, neopentylglycol diglycidyl ether, ethylene glycol diglycidyl ether, polyethylene glycol diglycidyl ether, propylene glycol diglycidyl ether, or polypropylene glycol diglycidyl ether. One or more of these examples may be used. In particular, in view of providing a zinc or zinc alloy coated steel sheet having more excellent corrosion resistance with a small film weight, an epoxy-group-containing silane coupling agent is preferred.

The epoxy-group-containing compound (C) used in the present invention is contained such that the ratio (B/C) of the mass of the tetraalkoxysilane (B) to the total mass of the epoxy-group-containing compound (C) is 0.1 to 1.6, preferably 0.2 to 1.2. When the mass ratio is less than 0.1, a zinc or zinc alloy coated steel sheet having excellent corrosion resistance is not provided. When the mass ratio is more than 1.6, adhesion of the film becomes poor.

A surface-treatment agent used in the present invention contains a chelating agent (D). A surface-treatment agent that contains the chelating agent (D) exhibits excellent storage stability. The reason for this is not clear. The chelating agent (D) probably has the effect of suppressing polymerization of the tetraalkoxysilane (B) in the surface-treatment agent. Probably as a result of this effect, even when the surface-treatment agent is stored over a long period of time after the preparation thereof, it does not alter and maintains the quality thereof at the time of preparation. The chelating agent (D) is also necessary to stably dissolve the vanadate compound (E) and the metal compound (F) in the surface-treatment agent. The chelating agent (D) is less likely to etch the surface of a zinc-coated layer than inorganic acids such as nitric acid, phosphoric acid, sulfuric acid, and hydrofluoric acid and does not form a passivation film of zinc phosphate or the like. Probably for these reasons, a zinc or zinc alloy coated steel sheet having a film formed with a surface-treatment agent containing the chelating agent (D) allows for more excellent continuity.

A chelating agent (D) used in the present invention is not particularly limited and examples thereof include a hydroxy carboxylic acid such as tartaric acid or malic acid; a monocarboxylic acid; a polycarboxylic acid such as dicarboxylic acid or a tricarboxylic acid: oxalic acid, malonic acid, succinic acid, citric acid, or adipic acid; an aminocarboxylic acid such as glycin; phosphonic acid, and phosphonate. One or more of these chelating agents may be used. In particular, in view of storage stability of the surface-treatment agent and corrosion resistance and continuity of the zinc or zinc alloy coated steel sheet, a compound having two or more carboxyl groups or two or more phosphonic acid groups in a molecule is preferred.

The chelating agent (D) used in the present invention is contained such that a ratio (B/D) of the mass of the tetraalkoxysilane (B) to the total mass of the chelating agent (D) is 0.3 to 2.0, preferably 0.5 to 1.8. When the mass ratio is less than 0.3 or more than 2.0, a zinc or zinc alloy coated steel sheet having excellent corrosion resistance is not obtained.

A surface-treatment agent used in the present invention contains a vanadate compound (E). The vanadate compound (E) is uniformly dispersed in a film formed on a surface of a zinc or zinc alloy coated steel sheet, in the form of being readily soluble in water and it exhibits the so-called inhibitor effect at the time of corrosion of zinc. Examples of the vanadate compound (E) used in the present invention include ammonium metavanadate and sodium metavanadate. One or more of these examples may be used.

The vanadate compound (E) used in the present invention is contained such that a ratio (E/D) of the total mass of the vanadate compound (E) in terms of V to the total mass of the chelating agent (D) is 0.03 to 1.0, more preferably 0.05 to 0.71. When the mass ratio is less than 0.03, a zinc or zinc alloy coated steel sheet having excellent corrosion resistance is not obtained. When the mass ratio is more than 1.0, it becomes difficult for the vanadate compound to dissolve in the surface-treatment agent.

A surface-treatment agent used in the present invention contains a metal compound (F) containing at least one metal selected from the group consisting of Ti, Al, and Zn. When such a metal component is contained, a zinc or zinc alloy coated steel sheet having excellent corrosion resistance (in particular, in processed portions) can be provided.

A metal compound (F) used in the present invention is not particularly limited as long as it is a metal compound containing at least one metal selected from the group consisting of Ti, Al, and Zn.

Examples of a Ti-containing metal compound include titanyl sulfate, titanyl nitrate, titanium nitrate, titanyl chloride, titanium chloride, titania sol, titanium oxide, potassium oxalate titanate, fluorotitanic acid, ammonium fluorotitanate, titanium lactate, titanium tetraisopropoxide, titanium acetylacetonate, and diisopropyl titanium bisacetylacetone. The examples further include metatitanic acid obtained by thermal hydrolysis of an aqueous solution of titanyl sulfate, orthotitanic acid obtained by neutralization of an aqueous solution of titanyl sulfate with an alkali, and salts of the foregoing.

Examples of an Al-containing metal compound include aluminum oxide, aluminum hydroxide, aluminum sulfate, aluminum nitrate, aluminum phosphate, and aluminum chloride.

Examples of a Zn-containing metal compound include zinc carbonate, zinc oxide, zinc hydroxide, zinc sulfate, zinc nitrate, zinc chloride, and zinc phosphate; and, since zinc is an amphoteric metal, the examples further include sodium zincate and potassium zincate, which are generated with an alkali. One or more of these examples may be used in combination.

The metal compound (F) used in the present invention is contained such that a ratio (F/D) of the total metal mass of the metal compound (F) to the total mass of the chelating agent (D) is 0.05 to 0.8, preferably 0.17 to 0.34. When the mass ratio is less than 0.05, a zinc or zinc alloy coated steel sheet having excellent corrosion resistance is not provided. When the mass ratio is more than 0.8, it becomes difficult for the metal compound (F) to dissolve in the surface-treatment agent.

A surface-treatment agent used in the present invention has a pH of 8 to 10, preferably a pH of 8.2 to 9.5. When the treatment solution has a pH of less than 8, storage stability of the surface-treatment agent, corrosion resistance of the zinc or zinc alloy coated steel sheet, and adhesion of a film formed on a surface of the steel sheet are degraded. When the treatment solution has a pH of more than 10 or is acidic, zinc is considerably etched and corrosion resistance and continuity of the zinc or zinc alloy coated steel sheet are degraded. In the present invention, an alkali used for the pH adjustment is preferably ammonium, an amine, an amine derivative, or an aminopolycarboxylic acid; and an acid for the pH adjustment is preferably selected from the above-described chelating agents (D).

A film formed on the surface of a zinc-coated layer according to the present invention is adjusted such that the coating weight thereof is 50 to 1200 mg/m² relative to the surface, preferably 100 to 900 mg/m², more preferably 100 to 500 or less mg/m². When the coating weight is less than 50 mg/m², there are cases where the advantages of the present invention are not sufficiently achieved. When the coating weight is more than 1200 mg/m², the advantages become saturated, which results in economical disadvantage, and there are cases where continuity becomes poor.

A surface-treatment agent used in the present invention may further contain a lubricant (G) for enhancing lubricity. Examples of the lubricant include solid lubricants such as polyethylene wax, polyethylene oxide wax, polypropylene oxide wax, carnauba wax, paraffin wax, montan wax, rice wax, Teflon (registered trademark) wax, carbon disulfide, and graphite. One or more of these solid lubricants may be used.

The content of the lubricant (G) used in the present invention is preferably 1 to 10 mass% relative to the total solid content of the surface-treatment agent, more preferably 3 to 7 mass%. When the content is 1 mass% or more, the lubricity is enhanced. When the content is 10 mass% or less, corrosion resistance of zinc or zinc alloy coated steel sheets is not degraded.

A surface-treatment agent used in the present invention may further contain a nonionic acrylic resin emulsion (H) for the purpose of enhancing corrosion resistance of a film formed on a surface of a zinc or zinc alloy coated steel sheet. The nonionic acrylic resin emulsion (H) is not particularly limited. An acrylic resin emulsified with a nonionic emulsifying agent may be used: for example, an aqueous emulsion obtained by emulsion polymerization of a vinyl monomer such as acrylic acid, methacrylic acid, acrylate, methacrylate, or styrene in water in the presence of a nonionic surfactant (emulsifying agent) having a polyethylene oxide or polypropylene oxide in the structure.

The content of the nonionic acrylic resin emulsion (H) used in the present invention is 0.5 to 45.0 mass% relative to the total solid content of the surface-treatment agent, preferably 1.0 to 40.0 mass%, more preferably 4.5 mass% or less. When the content is 0.5 mass% or more, the effect of enhancing wettability of the surface-treatment agent is provided. When the content is 45.0 mass% or less, the continuity of zinc or zinc alloy coated steel sheets is not degraded.

A surface-treatment agent used in the present invention is provided by mixing the above-described components in water such as deionized water or distilled water. The solid content of the surface-treatment agent may be appropriately determined. A surface-treatment agent used in the present invention may optionally contain a water-soluble solvent containing an alcohol, a ketone, cellosolve, or the like; a surfactant; a defoaming agent; a leveling agent; an antimicrobial-antifungal agent; a colorant; or the like. Addition of such agents enhances the drying property, coating appearance, processability, storage stability, and design property of the surface-treatment agent. However, it is important that the agents are added as long as qualities provided by the present invention are not degraded. The maximum amount of the agents added is less than 5 mass% relative to the total solid content of the surface-treatment agent.

A method for coating a zinc or zinc alloy coated steel sheet with a surface-treatment agent according to the present invention is optimally selected in accordance with, for example, the shape of the zinc or zinc alloy coated steel sheet to be treated and may be roll coating, bar coating, dipping, spray coating, or the like. Specifically, for example, a zinc or zinc alloy coated steel sheet having the shape of a sheet is coated by roll coating, bar coating, or spraying a surface-treatment agent and adjusting the adhesion amount by roll squeezing or blowing of gas at a high pressure; or a zinc or zinc alloy coated steel sheet having the shape of a formed product may be coated by dipping the zinc or zinc alloy coated steel sheet in a surface-treatment agent, withdrawing the zinc or zinc alloy coated steel sheet, and optionally adjusting the adhesion amount by blowing off excessive surface-treatment agent with compressed air.

Before a zinc or zinc alloy coated steel sheet is coated with a surface-treatment agent, the zinc or zinc alloy coated steel sheet may be optionally subjected to a pretreatment performed for the purpose of removing oil or stains on a surface of the zinc or zinc alloy coated steel sheet. Zinc or zinc alloy coated steel sheets are often coated with rust-inhibiting oil for preventing rust. When zinc or zinc alloy coated steel sheets are not coated with rust-inhibiting oil, oil, stains, or the like adhere to the steel sheets during processes. By subjecting a zinc or zinc alloy coated steel sheet to the pretreatment, the surface of the zinc or zinc alloy coated steel sheet is cleaned and the surface of the metal material becomes uniformly wettable. When oil and stains are not present and uniform wetting with a surface-treatment agent can be achieved, the pretreatment step may be eliminated.

The method for performing the pretreatment is not particularly limited and may be, for example, cleaning with hot water, cleaning with a solvent, or alkaline-degrease cleaning.

The heating temperature (maximum sheet temperature) at the time of drying a film formed on a surface of a zinc or zinc alloy coated steel sheet according to the present invention is generally 60°C to 200°C, preferably 80°C to 180°C. When the heating temperature is 60°C or more, water serving as the main solvent does not remain and, for example, the corrosion resistance of a zinc or zinc alloy coated steel sheet is not degraded. When the heating temperature is 200°C or less, degradation of corrosion resistance of a zinc or zinc alloy coated steel sheet due to cracking of a film is not caused. The method for performing drying by heating is not particularly limited. For example, a surface-treatment agent may be dried by heating with hot air, an induction heater, infrared rays, near-infrared rays, or the like.

As for the time for which the heating is performed, an optimal condition is appropriately selected in accordance with, for example, the type of a zinc or zinc alloy coated steel sheet used. In view of productivity and the like, the time is preferably 0.1 to 60 seconds, more preferably 1 to 30 seconds.

The reasons why a zinc or zinc alloy coated steel sheet obtained by the present invention has various properties such as corrosion resistance and adhesion of a film formed on a surface of the zinc or zinc alloy coated steel sheet and allows for desired continuity without degradation of the corrosion resistance are not necessarily clear. However, such advantages are probably provided by the following effects.

In the present invention, the skeleton of a film formed on a zinc or zinc alloy coated steel sheet is constituted by a water-soluble zirconium compound, a tetraalkoxysilane, and an epoxy-group-containing compound. A dried film composed of water-soluble zirconium does not dissolve back into water and provides a barrier effect. Thus, a zinc or zinc alloy coated steel sheet is provided that is excellent in terms of various properties such as corrosion resistance of the zinc or zinc alloy coated steel sheet, adhesion of a film, and corrosion resistance of the zinc or zinc alloy coated steel sheet after alkaline degreasing, and is excellent in terms of heat resistance and weldability, which are characteristics of inorganic films. In addition, the presence of the tetraalkoxysilane probably results in three-dimensional crosslinking between silanol groups generated from the alkoxy groups and the water-soluble zirconium compound to thereby form a dense film. In addition, a surface-treatment agent according to the present invention contains the epoxy-group-containing compound and, as a result, crosslinking reaction of the epoxy groups with the silanol groups and the water-soluble zirconium probably occurs. Accordingly, the bonding strength of the film is probably further enhanced. By using the epoxy-group-containing compound, a zinc or zinc alloy coated steel sheet is provided that is excellent in terms of resistance to scratching and lubricity, which are characteristics of organic films.

The vanadate compound and the metal compound are uniformly dispersed in a film in the form of being readily soluble in water and exhibit the so-called inhibitor effect at the time of corrosion of zinc. Specifically, portions of the vanadate compound and the metal compound are probably ionized in a corrosive environment and passivated to thereby suppress corrosion of zinc. In particular, the metal compound is probably mainly released in defect portions of the film after the forming to thereby suppress corrosion of zinc. The chelating agent probably provides, in the surface-treatment agent, the effect of suppressing polymerization of the tetraalkoxysilane and the effect of stably dissolving the vanadate compound and the metal compound. When the film is formed by drying, the chelating agent does not form an insulating film such as a zinc phosphate film and the carboxyl groups or phosphonic acid groups in the chelating agent serve as a crosslinking agent for forming the dense skeleton of the film together with the film-skeleton components. Accordingly, the chelating agent probably enhances the continuity.

In summary, a zinc or zinc alloy coated steel sheet allowing for excellent continuity according to the present invention can maintain excellent continuity even when it is in contact under a low pressure with a gasket or the like probably because a film formed from a water-soluble zirconium compound, a tetraalkoxysilane, and an epoxy-group-containing compound is highly corrosive resistant in spite of a small thickness, and a chelating agent, a vanadate compound, and a metal compound serving as corrosion inhibitors are made present in the film.

The present invention can provide a zinc or zinc alloy coated steel sheet having various properties such as corrosion resistance and adhesion and allowing for excellent continuity without degrading corrosion resistance even under a severe condition in which the steel sheet is under a low contact pressure. Such zinc or zinc alloy coated steel sheets according to the present invention are applicable to various applications and are suitably used as, for example, materials used in various fields relating to construction, electricity, automobiles, and the like.

### [EXAMPLES]

Hereinafter, advantages according to the present invention will be described with reference to Examples and Comparative examples. However, the Examples are mere examples for illustrating the present invention and do not limit the present invention.

### 1. Method for preparing test sheets

### (1) test sheets (materials)

The following commercially available materials were used as test sheets.
(i) electrogalvanized steel sheet (EG): sheet thickness of 0.8 mm and coating weight of 20/20 (g/m²)
(ii) hot dip galvanized steel sheet (GI): sheet thickness of 0.8 mm and coating weight of 60/60 (g/m²)
(iii) hot dip galvannealed steel sheet (GA): sheet thickness of 0.8 mm and coating weight of 40/40 (g/m²)

Note that the coating weight represents a coating weight relative to a main surface of each steel sheet. For example, the electrogalvanized steel sheet has a coating weight of 20/20 (g/m²) and has a coated layer having a coating weight of 20 g/m² on each surface of the steel sheet.

### (2) Pretreatment (cleaning)

Test samples were prepared in the following manner. A surface of each test material was treated with PALKLIN N364S manufactured by Nihon Parkerizing Co., LTD. to remove oil and stains on the surface. The surface of the metal material was then cleaned with tap water and it was demonstrated that the 100% area of the surface was wet with water. Pure water (deionized water) was further splashed onto the metal material. The metal material was dried in an oven having an atmosphere at 100°C and then used as a test sample.

### (3) Preparation of treatment solutions according to the present invention

Surface-treatment agents were obtained by mixing the components in deionized water so as to achieve the compositions (mass ratios) in Table 1. Note that the mixing amounts of the components (G) and (H) in Table 1 are the amounts (g) of the components (G) and (H) added to 1 kg of a surface-treatment agent.

**[Table 1 (No. 1)]**

| Test condition | | Surface-treatment agents for galvanized surfaces | | | | | | | | | | | | | | | | | |
|---|---|---|---|---|---|---|---|---|---|---|---|---|---|---|---|---|---|---|---|
| | | Composition | | | | | | | | | | | | | | | | | pH |
| | | Component (A) | Component (B) | Component (C) | Component (D) | Component (E) | Component (F) | component (G) | | Component (H) | | (A/B) | (B/C) | (B/D) | (E/D) | (F/D) | (G) | (H) | |
| | | Type | Type | Type | Type | Type | Type | Type | Mixing amount | Type | Mixing amount | Mass ratio | Mass ratio | Mass ratio | Mass ratio | Mass ratio | Mass% | Mass% | |
| Example | 1 | A2 | B1 | C2 | D1 +D2 (*3) | E2 | F1 | - | 0 | - | 0 | 1.40 | 0.43 | 1.22 | 0.34 | 0.07 | 0.00 | 0.00 | 8.4 |
| Example | 2 | A1 | B1 | C2 | D1 +D2 (*3) | E2 | F1 | - | 0 | - | 0 | 1.68 | 0.43 | 1.22 | 0.34 | 0.07 | 0.00 | 0.00 | 8.4 |
| Example | 3 | A1 +A2 (*1) | B1 | C2 | D1 +D2 (*3) | E2 | F1 | - | 0 | - | 0 | 1.68 | 0.43 | 1.22 | 0.34 | 0.07 | 0.00 | 0.00 | 8.4 |
| Example | 4 | A2 | B1 | C2 | D1 +D2 (*3) | E2 | F1 | - | 0 | - | 0 | 1.68 | 0.43 | 1.22 | 0.34 | 0.07 | 0.00 | 0.00 | 8.4 |
| Example | 5 | A2 | B1 | C2 | D1 | E2 | F1 | - | 0 | - | 0 | 3.03 | 0.43 | 1.22 | 0.34 | 0.07 | 0.00 | 0.00 | 8.4 |
| Example | 6 | A2 | B1 | C2 | D1 +D2 (*3) | E2 | F1 | - | 0 | - | 0 | 3.03 | 0.43 | 1.22 | 0.34 | 0.07 | 0.00 | 0.00 | 8.4 |
| Example | 7 | A2 | B1 | C2 | D2 | E2 | F1 | - | 0 | - | 0 | 3.03 | 0.43 | 1.22 | 0.34 | 0.07 | 0.00 | 0.00 | 8.4 |
| Example | 8 | A2 | B1 | C2 | D1 +D2 (*3) | E1 | F1 | - | 0 | - | 0 | 5.97 | 0.43 | 1.22 | 0.34 | 0.07 | 0.00 | 0.00 | 8.4 |
| Example | 9 | A1 | B1 | C2 | D1 +D2 (*3) | E1 | F2 | - | 0 | - | 0 | 5.89 | 0.10 | 0.30 | 0.34 | 0.07 | 0.00 | 0.00 | 8.4 |
| Example | 10 | A1 | B1 | C2 | D1 +D2 (*3) | E1 | F2 | - | 0 | - | 0 | 2.94 | 0.20 | 0.61 | 0.34 | 0.07 | 0.00 | 0.00 | 8.4 |

| Component (A) | Component (B) | Component (C) | Component (D) | Component (E) | Component (F) | | | Component (G) | | Component (H) | | (A/B) | (B/C) | (B/D) | (E/D) | (F/D) | (G) | (H) | |
|---|---|---|---|---|---|---|---|---|---|---|---|---|---|---|---|---|---|---|---|
| Type | Type | Type | Type | Type | Type | Type | Mixing amount | Type | Mixing amount | Mass ratio | Mass ratio | Mass ratio | Mass ratio | Mass ratio | Mass% | Mass% | | | |
| Example | 11 | A1 | B2 | C2 | D1 +D2 (*3) | E1 | F2 | - | 0 | - | 0 | 2.94 | 0.20 | 0.61 | 0.34 | 0.07 | 0.00 | 0.00 | 8.4 |
| Example | 12 | A1 | B1 | C2 | D1 +D2 (*3) | E1 | F2 | - | 0 | - | 0 | 2.94 | 0.20 | 0.61 | 0.34 | 0.07 | 0.00 | 0.00 | 8.4 |
| Example | 13 | A1 | B1 | C2 | D1 +D2 (*3) | E1 | F2 | - | 0 | - | 0 | 1.47 | 0.43 | 1.22 | 0.34 | 0.07 | 0.00 | 0.00 | 8.4 |
| Example | 14 | A1 | B1 | C2 | D1 +D2 (*3) | E1 | F2 | - | 0 | - | 0 | 1.47 | 0.43 | 1.22 | 0.34 | 0.07 | 0.00 | 0.00 | 8.4 |
| Example | 15 | A1 | B1 | C2 | D1 +D2 (*3) | E1 | F2 | - | 0 | - | 0 | 1.47 | 0.43 | 1.22 | 0.34 | 0.07 | 0.00 | 0.00 | 8.4 |
| Example | 16 | A1 | B1 | C2 | D1 +D2 (*3) | E1 | F2 | - | 0 | - | 0 | 1.49 | 0.95 | 1.69 | 0.22 | 0.05 | 0.00 | 0.00 | 8.4 |
| Example | 17 | A1 | B1 | C1 | D1 +D2 (*3) | E1 | F2 | - | 0 | - | 0 | 1.35 | 1.06 | 1.88 | 0.22 | 0.05 | 0.00 | 0.00 | 8.4 |
| Example | 18 | A1 | B1 | C1 +C2 (*2) | D1 +D2 (*3) | E1 | F2 | - | 0 | - | 0 | 1.35 | 1.06 | 1.88 | 0.22 | 0.05 | 0.00 | 0.00 | 8.4 |
| Example | 19 | A1 | B1 | C2 | D1 +D2 (*3) | E1 | F2 | - | 0 | - | 0 | 1.35 | 1.06 | 1.88 | 0.22 | 0.05 | 0.00 | 0.00 | 8.4 |
| Example | 20 | A1 | B1 | C2 | D1 +D2 (*3) | E1 | F2 | - | 0 | - | 0 | 1.28 | 1.11 | 1.97 | 0.22 | 0.05 | 0.00 | 0.00 | 8.4 |
| Example | 21 | A1 | B1 | C2 | D1 +D2 (*3) | E1 | F2 | - | 0 | - | 0 | 1.47 | 1.05 | 1.22 | 0.34 | 0.07 | 0.00 | 0.00 | 8.4 |
| Example | 22 | A1 | B1 | C2 | D1 +D2 (*3) | E1 | F2 | - | 0 | - | 0 | 1.47 | 0.43 | 1.22 | 0.34 | 0.07 | 0.00 | 0.00 | 8.0 |
| Example | 23 | A1 | B1 | C2 | D1 +D2 (*3) | E1 | F2 | - | 0 | - | 0 | 1.47 | 0.43 | 1.22 | 0.34 | 0.07 | 0.00 | 0.00 | 8.2 |
| Example | 24 | A1 | B1 | C2 | D1 +D2 (*3) | E1 | F2 | - | 0 | - | 0 | 1.47 | 0.43 | 1.22 | 0.34 | 0.07 | 0.00 | 0.00 | 9.5 |
| Example | 25 | A1 | B1 | C2 | D1 +D2 (*3) | E1 | F2 | - | 0 | - | 0 | 1.47 | 0.43 | 1.22 | 0.34 | 0.07 | 0.00 | 0.00 | 10.0 |
| Example | 26 | A1 | B1 | C2 | D1 +D2 (*3) | E1 | F2 | - | 0 | - | 0 | 1.47 | 0.84 | 1.22 | 0.34 | 0.07 | 0.00 | 0.00 | 8.4 |
| Example | 27 | A1 | B1 | C2 | D1 +D2 (*3) | E1 | F2 | - | 0 | - | 0 | 1,47 | 0,63 | 1,22 | 0,34 | 0,07 | 0,00 | 0,00 | 8,4 |
| Example | 28 | A2 | B2 | C1 | D1 | E2 | F3 | - | 0 | - | 0 | 1,47 | 0,43 | 0,31 | 0,09 | 0,06 | 0,00 | 0,00 | 8,4 |
| Example | 29 | A2 | B2 | C1 | D1 | E1 | F3 | - | 0 | - | 0 | 1,47 | 0,43 | 0,57 | 0,16 | 0,11 | 0,00 | 0,00 | 8,4 |
| Example | 30 | A2 | B2 | C1 | D1 | E1 +E2 (*4) | F3 | - | 0 | - | 0 | 1,47 | 0,43 | 0,57 | 0,16 | 0,11 | 0,00 | 0,00 | 8,4 |
| Example | 31 | A2 | B2 | C1 | D1 | E2 | F3 | - | 0 | - | 0 | 1,47 | 0,43 | 0,57 | 0,16 | 0,11 | 0,00 | 0,00 | 8,4 |
| Example | 32 | A2 | B2 | C1 | D1 | E2 | F3 | - | 0 | - | 0 | 1,47 | 0,43 | 0,47 | 0,14 | 0,09 | 0,00 | 0,00 | 8,4 |
| Example | 33 | A2 | B2 | C1 | D1 | E2 | F3 | - | 0 | - | 0 | 1,47 | 0,43 | 0,93 | 0,27 | 0,06 | 0,00 | 0,00 | 8,4 |
| Example | 34 | A2 | B2 | C1 | D1 | E2 | F3 | - | 0 | - | 0 | 1,47 | 0,43 | 1,01 | 0,29 | 0,06 | 0,00 | 0,00 | 8.4 |
| Example | 35 | A2 | B2 | C1 | D1 | E2 | F1 | - | 0 | - | 0 | 1,47 | 0,43 | 1,69 | 0,48 | 0,10 | 0,00 | 0,00 | 8,4 |
| Example | 36 | A2 | B2 | C1 | D1 | E2 | F1 +F2 (*5) | - | 0 | - | 0 | 1,47 | 0,43 | 1,69 | 0,48 | 0,10 | 0,00 | 0,00 | 8,4 |
| Example | 37 | A2 | B2 | C1 | D1 | E2 | F2 | - | 0 | - | 0 | 1,47 | 0,43 | 1,69 | 0,48 | 0,10 | 0,00 | 0.00 | 8.4 |
| Example | 38 | A2 | B2 | C1 | D1 | E2 | F3 | - | 0 | - | 0 | 1,47 | 0,43 | 1,69 | 0,48 | 0,10 | 0,00 | 0,00 | 8,4 |
| Example | 39 | A2 | B2 | C1 | D1 | E2 | F3 | - | 0 | - | 0 | 1,47 | 0,43 | 1,76 | 0,51 | 0,11 | 0,00 | 0,00 | 8,4 |
| Example | 40 | A2 | B2 | C1 | D1 | E2 | F3 | - | 0 | - | 0 | 1,47 | 0,43 | 2,00 | 0,58 | 0,12 | 0,00 | 0,00 | 8,4 |
| Example | 41 | A2 | B2 | C1 | D1 | E2 | F1 +F2 (*5) | - | 0 | - | 0 | 1,47 | 0,43 | 1,22 | 0,05 | 0,07 | 0,00 | 0,00 | 8,4 |
| Example | 42 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 43 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 44 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 45 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 46 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 47 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 48 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 49 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 50 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Example | 51 | A2 | B2 | C1 | D2 | E2 | F1 +F2 (*5) | - | 0 | - | 0 | 2.94 | 0.20 | 1.18 | 0.03 | 0.14 | 0.00 | 0.00 | 8.4 |
| Example | 52 | A2 | B2 | C1 | D2 | E2 | F1 +F2 (*5) | - | 0 | - | 0 | 2.94 | 0.20 | 1.18 | 0.18 | 0.14 | 0.00 | 0.00 | 8.4 |
| Example | 53 | A2 | B2 | C1 | D2 | E2 | F1 +F2 (*5) | - | 0 | - | 0 | 2.94 | 0.20 | 1.18 | 0.65 | 0.14 | 0.00 | 0.00 | 8.4 |
| Example | 54 | A2 | B2 | C1 | D2 | E2 | F1 +F2 (*5) | - | 0 | - | 0 | 2.94 | 0.20 | 1.18 | 0.71 | 0.14 | 0.00 | 0.00 | 8.4 |
| Example | 55 | A2 | B2 | C1 | D1 | E2 | F1 +F3 (*6) | - | 0 | - | 0 | 1.47 | 0.43 | 1.22 | 0.34 | 0.05 | 0.00 | 0.00 | 8.4 |
| Example | 56 | A2 | B2 | C1 | D1 | E2 | F1 +F3 (*6) | - | 0 | - | 0 | 1.47 | 0.43 | 1.22 | 0.34 | 0.17 | 0.00 | 0.00 | 8.4 |
| Example | 57 | A2 | B2 | C1 | D1 | E2 | F1 +F3 (*6) | - | 0 | - | 0 | 1.47 | 0.43 | 1.22 | 0.34 | 0.34 | 0.00 | 0.00 | 8.4 |
| Example | 58 | A2 | B2 | C1 | D1 | E2 | F1 +F3 (*6) | - | 0 | - | 0 | 1.47 | 0.43 | 1.22 | 0.34 | 0.80 | 0.00 | 0.00 | 8.4 |
| Example | 59 | A2 | B2 | C1 | D1 +D2 (*3) | E2 | F1 | - | 0 | H1 | 1.3 | 1.47 | 0.43 | 1.22 | 0.34 | 0.07 | 0.00 | 0.5 | 8.4 |
| Example | 60 | A2 | B2 | C1 | D1 +D2 (*3) | E2 | F1 | - | 0 | - | 0 | 1.47 | 0.43 | 1.22 | 0.34 | 0.07 | 0.00 | 0.00 | 8.4 |
| Example | 61 | A2 | B2 | C1 | D1 +D2 (*3) | E2 | F1 | - | 0 | H1 | 3.3 | 1.47 | 0.43 | 1.22 | 0.34 | 0.07 | 0.00 | 1.0 | 8.4 |
| Example | 62 | A2 | B2 | C1 | D1 +D2 (*3) | E2 | F1 | - | 0 | - | 0 | 1.47 | 0.43 | 1.22 | 0.34 | 0.07 | 0.00 | 0.00 | 8.4 |
| Example | 63 | A2 | B2 | C1 | D1 +D2 (*3) | E2 | F1 | - | 0 | - | 0 | 1.47 | 0.43 | 1.22 | 0.34 | 0.07 | 0.00 | 0.00 | 8.4 |
| Example | 64 | A2 | B2 | C1 | D1 +D2 (*3) | E2 | F1 | - | 0 | - | 0 | 1.47 | 0.43 | 1.22 | 0.34 | 0.07 | 0.00 | 0.00 | 8.4 |
| Example | 65 | A2 | B2 | C1 | D1 +D2 (*3) | E2 | F1 | - | 0 | - | 0 | 1.47 | 0.43 | 1.22 | 0.34 | 0.07 | 0.00 | 0.00 | 8.4 |
| Example | 66 | A2 | B2 | C1 | D1 +D2 (*3) | E2 | F1 | - | 0 | - | 0 | 1.47 | 0.43 | 1.22 | 0.34 | 0.07 | 0.00 | 0.00 | 8.4 |
| Example | 67 | A2 | B1 | C1 | D1 +D2 (*3) | E1 | F1 | - | 0 | - | 0 | 1.47 | 0.43 | 1.22 | 0.34 | 0.07 | 0.00 | 0.00 | 8.4 |
| Example | 68 | A2 | B2 | C1 | D1 +D2 (*3) | E2 | F1 | - | 0 | - | 0 | 1.47 | 0.43 | 1.22 | 0.34 | 0.07 | 0.00 | 0.00 | 8.4 |
| Example | 69 | A2 | B2 | C1 | D1 +D2 (*3) | E2 | F1 | - | 0 | H1 | 30 | 1.47 | 0.43 | 1.22 | 0.34 | 0.07 | 0.00 | 8.6 | 8.4 |
| Example | 70 | A2 | B2 | C1 | D1 +D2 (*3) | E2 | F1 | - | 0 | H1 | 300 | 1.47 | 0.43 | 1.22 | 0.34 | 0.07 | 0.00 | 48.6 | 8.4 |
| Example | 71 | A2 | B2 | C1 | D1 +D2 (*3) | E2 | F1 +F2 (*5) | G1 | 2.5 | - | 0 | 1.47 | 0.43 | 1.22 | 0.34 | 0.07 | 1 | 0.00 | 8.4 |
| Example | 72 | A2 | B2 | C1 | D1 +D2 (*3) | E2 | F1 +F2 (*5) | G1 | 10.0 | - | 0 | 1.47 | 0.43 | 1.22 | 0.34 | 0.07 | 3 | 0.00 | 8.4 |
| Example | 73 | A2 | B2 | C1 | D1 +D2 (*3) | E2 | F1 +F2 (*5) | G1 | 25.0 | - | 0 | 1.47 | 0.43 | 1.22 | 0.34 | 0.07 | 7 | 0.00 | 8.4 |
| Example | 74 | A2 | B2 | C1 | D1 +D2 (*3) | E2 | F1 +F2 (*5) | G1 | 37.5 | - | 0 | 1.47 | 0.43 | 1.22 | 0.34 | 0.07 | 10 | 0.00 | 8.4 |
| Example | 75 | A2 | B2 | C1 | D1 +D2 (*3) | E2 | F1 +F2 (*5) | G1 | 50.0 | - | 0 | 1.47 | 0.43 | 1.22 | 0.34 | 0.07 | 12 | 0.00 | 8.4 |
| Example | 76 | A2 | B2 | C1 | D1 +D2 (*3) | E2 | F1 +F2 (*5) | G1 | 20.0 | H1 | 50 | 1.47 | 0.43 | 1.22 | 0.34 | 0.07 | 5 | 13.3 | 8.4 |
| Example | 77 | A2 | B2 | C1 | D1 +D2 (*3) | E2 | F1 +F2 (*5) | G1 | 22.5 | H1 | 100 | 1.47 | 0.43 | 1.22 | 0.34 | 0.07 | 5 | 23.4 | 8.4 |
| Example | 78 | A2 | B2 | C1 | D1 +D2 (*3) | E2 | F1 +F2 (*5) | G1 | 22.5 | H1 | 100 | 1.47 | 0.43 | 1.22 | 0.34 | 0.07 | 5 | 23.4 | 8.4 |
| Example | 79 | A2 | B2 | C1 | D1 +D2 (*3) | E2 | F1 +F2 (*5) | G1 | 22.5 | H1 | 100 | 1.47 | 0.43 | 1.22 | 0.34 | 0.07 | 5 | 23.4 | 8.4 |
| Example | 80 | A2 | B2 | C1 | D1 +D2 (*3) | E2 | F1 +F2 (*5) | G1 | 22.5 | H1 | 100 | 1.47 | 0.43 | 1.22 | 0.34 | 0.07 | 5 | 23.4 | 8.4 |
| Example | 81 | A2 | B2 | C1 | D1 +D2 (*3) | E2 | F1 +F2 (*5) | G1 | 30.5 | H1 | 250 | 1.47 | 0.43 | 1.22 | 0.34 | 0.07 | 5 | 43.4 | 8.4 |
| Comparative example | 82 | A2 | B1 | C2 | D1 +D2 (*3) | E2 | F1 | - | 0 | - | 0 | 0.84 | 0.43 | 1.22 | 0.34 | 0.07 | 0.00 | 0.00 | 8.4 |
| Comparative example | 83 | A2 | B1 | C2 | D1 +D2 (*3) | E1 | F1 | - | 0 | - | 0 | 7.57 | 0.43 | 1.22 | 0.34 | 0.07 | 0.00 | 0.00 | 8.4 |
| Comparative example | 84 | A1 | B1 | C2 | D1 +D2 (*3) | E1 | F2 | - | 0 | - | 0 | 11.77 | 0.05 | 0.15 | 0.34 | 0.07 | 0.00 | 0.00 | 8.4 |
| Comparative example | 85 | A1 | B1 | C2 | D1 +D2 (*3) | E1 | F2 | - | 0 | - | 0 | 0.29 | 2.12 | 6.09 | 0.34 | 0.07 | 0.00 | 0.00 | 8.4 |
| Comparative example | 86 | A2 | B2 | C1 | D1 | E2 | F3 | - | 0 | - | 0 | 1.47 | 0.43 | 2.00 | 0.06 | 0.01 | 0.00 | 0.00 | 8.4 |
| Comparative example | 87 | A2 | B2 | C1 | D1 | E2 | F3 | - | 0 | - | 0 | 1.47 | 0.43 | 2.51 | 0.72 | 0.15 | 0.00 | 0.00 | 8.4 |
| Comparative example | 88 | A2 | B2 | C1 | D2 | E2 | F1 +F2 (*5) | - | 0 | - | 0 | 2.94 | 2.04 | 1.18 | 0.01 | 0.14 | 0.00 | 0.00 | 8.4 |
| Comparative example | 89 | A2 | B2 | C1 | D2 | E2 | F1 +F2 (*5) | - | 0 | - | 0 | 2.94 | 0.20 | 1.18 | 1.18 | 0.14 | 0.00 | 0.00 | 8.4 |
| Comparative example | 90 | A2 | B2 | C1 | D1 | E2 | F1 +F3 (*6) | - | 0 | - | 0 | 1.47 | 0.43 | 1.22 | 0.34 | 0.002 | 0.00 | 0.00 | 8.4 |
| Comparative example | 91 | A2 | B2 | C1 | D1 | E2 | F1 +F3 (*6) | - | 0 | - | 0 | 1.47 | 0.43 | 1.22 | 0.34 | 1.01 | 0.00 | 0.00 | 8.4 |
| Comparative example | 92 | A1 | B1 | C2 | D1 +D2 (*3) | E1 | F2 | - | 0 | - | 0 | 1.47 | 0.43 | 1.22 | 0.34 | 0.07 | 0.00 | 0.00 | 4.5 |
| Comparative example | 93 | A1 | B1 | C2 | D1 +D2 (*3) | E1 | F1 | - | 0 | - | 0 | 1.47 | 0.43 | 1.22 | 0.34 | 0.07 | 0.00 | 0.00 | 11.0 |
| Comparative example | 94 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Comparative example | 95 | A2 | B2 | C1 +C2 (*2) | D1 | E1 | F1 +F2 (*5) | - | 0 | - | 0 | 1.47 | 0.43 | 1.22 | 0.34 | 0.07 | 0.00 | 0.00 | 8.4 |
| Comparative example | 96 | A2 | B2 | C1 | D1 +D2 (*3) | E2 | F1 +F2 (*5) | G1 | 22.5 | H1 | 100 | 1.47 | 0.43 | 1.22 | 0.34 | 0.07 | 5 | 23.4 | 8.4 |
| Comparative example | 97 | A2 | B2 | C1 | D1 +D2 (*3) | E2 | F1 +F2 (*5) | G1 | 22.5 | H1 | 100 | 1.47 | 0.43 | 1.22 | 0.34 | 0.07 | 5 | 23.4 | 8.4 |
| Comparative example | 98 | - | B1 | C1 | D1 +D2 (*3) | E1 | F1 | - | 0 | - | 0 | 0.00 | 0.43 | 2.37 | 0.68 | 0.14 | 0.00 | 0.00 | 8.4 |
| Comparative example | 99 | A2 | - | C1 | D1 +D2 (∗3) | E1 | F1 | - | 0 | - | 0 | - | 0.00 | 0.00 | 0.68 | 0.14 | 0.00 | 0.00 | 8.4 |
| Comparative example | 100 | A2 | B1 | - | D1 +D2 (∗3) | E1 | F1 | - | 0 | - | 0 | 1.47 | - | 2.37 | 0.68 | 0.14 | 0.00 | 0.00 | 8.4 |
| Comparative example | 101 | A2 | B1 | C1 | D1 +D2 (∗3) | - | - | - | 0 | - | 0 | 1.47 | 0.43 | 2.37 | - | - | 0.00 | 0.00 | 8.4 |
| Comparative example | 102 | A2 | B1 | C1 | D1 +D2 (∗3) | E1 | - | - | 0 | - | 0 | 1.47 | 0.43 | 2.37 | 0.00 | 0.14 | 0.00 | 0.00 | 8.4 |
| Comparative example | 103 | A2 | B1 | C1 | - | E1 | F1 | - | 0 | - | 0 | 1.47 | 0.43 | 2.37 | 0.68 | 0.00 | 0.00 | 0.00 | 8.4 |

| | | | | | | | | | | | | | | | | | | | |
|---|---|---|---|---|---|---|---|---|---|---|---|---|---|---|---|---|---|---|---|
| (∗1)-(∗6) mixing ratios (mass ratios) (∗1)A1:A2=1:1 (∗2)C1:C2=1:1 (∗3)D1:D2=9:1 (∗4)E1:E2=1:1 (∗5)F1:F2=1:1 (∗6)F1:F3=1:1 | | | | | | | | | | | | | | | | | | | |

Hereinafter, the compounds used in Table 1 will be described.

### <Water-soluble zirconium compound (A)>

A1: sodium zirconium carbonate
A2: ammonium zirconium carbonate

### <Tetraalkoxysilane (B)>

B1: tetraethoxysilane
B2: tetramethoxysilane

### <Epoxy-group-containing compound (C)>

C1: γ-glycidoxypropyltriethoxysilane
C2: polyethylene glycol diglycidyl ether

### <Chelating agent (D)>

D1: 1-hydroxymethane-1,1-diphosphonic acid
D2: tartaric acid

### <Vanadate compound (E)>

E1: ammonium metavanadate
E2: sodium metavanadate

### <Metal compound (F)>

F1: ammonium fluorotitanate
F2: aluminum nitrate hexahydrate
F3: zinc carbonate

### <Lubricant (G)>

G1: polyethylene wax (CHEMIPEARL (registered trademark) W900 manufactured by Mitsui Chemicals, Inc.)

### <Nonionic acrylic resin emulsion (H)>

H1: styrene-ethylmethacrylate-n-butylacrylate-acrylic acid copolymer

### (4) Treatment method

A single surface of each test sample was coated with such a surface-treatment agent by bar coating. After that, the test sample was not washed with water and was placed in an oven, and dried at a drying temperature in Table 2 to form a film having a coating weight (mg/m²) in Table 2.

The drying temperature was adjusted by changing the atmosphere temperature in the oven and the time for which a test sample was placed in the oven. The drying temperature is the maximum temperature of a single surface of a test sample. The bar coating was specifically performed in the following manner.

Bar coating: the surface-treatment agents were dropped onto the test samples and applied over the test samples with #3-5 bar coaters. A coating weight in Table 2 was achieved by changing the number of a bar coater used and the concentration of a surface-treatment agent.

**[Table 2 (No. 1)]**

| Test condition | | Test sheet | Treatment method | | |
|---|---|---|---|---|---|
| | | | Coating method | Coating weight | Drying temperature |
| | | Type | Type | mg/m2 | °C |
| Example | 1 | (i) | Bar coating | 300 | 140 |
| Example | 2 | (i) | Bar coating | 300 | 140 |
| Example | 3 | (i) | Bar coating | 300 | 140 |
| Example | 4 | (i) | Bar coating | 300 | 140 |
| Example | 5 | (i) | Bar coating | 300 | 140 |
| Example | 6 | (i) | Bar coating | 300 | 140 |
| Example | 7 | (i) | Bar coating | 300 | 140 |
| Example | 8 | (i) | Bar coating | 300 | 140 |
| Example | 9 | (i) | Bar coating | 300 | 140 |
| Example | 10 | (i) | Bar coating | 300 | 140 |
| Example | 11 | (i) | Bar coating | 300 | 140 |
| Example | 12 | (i) | Bar coating | 300 | 140 |
| Example | 13 | (i) | Bar coating | 300 | 140 |
| Example | 14 | (ii) | Bar coating | 300 | 140 |
| Example | 15 | (iii) | Bar coating | 300 | 140 |
| Example | 16 | (i) | Bar coating | 300 | 140 |
| Example | 17 | (i) | Bar coating | 300 | 140 |
| Example | 18 | (i) | Bar coating | 300 | 140 |
| Example | 19 | (i) | Bar coating | 300 | 140 |
| Example | 20 | (i) | Bar coating | 300 | 140 |
| Example | 21 | (i) | Bar coating | 300 | 140 |
| Example | 22 | (i) | Bar coating | 300 | 140 |
| Example | 23 | (i) | Bar coating | 300 | 140 |
| Example | 24 | (i) | Bar coating | 300 | 140 |
| Example | 25 | (i) | Bar coating | 300 | 140 |
| Example | 26 | (i) | Bar coating | 300 | 140 |
| Example | 27 | (i) | Bar coating | 300 | 140 |
| Example | 28 | (i) | Bar coating | 300 | 140 |
| Example | 29 | (i) | Bar coating | 300 | 140 |
| Example | 30 | (i) | Bar coating | 300 | 140 |
| Example | 31 | (i) | Bar coating | 300 | 140 |
| Example | 32 | (i) | Bar coating | 300 | 140 |
| Example | 33 | (i) | Bar coating | 300 | 140 |
| Example | 34 | (i) | Bar coating | 300 | 140 |
| Example | 35 | (i) | Bar coating | 300 | 140 |
| Example | 36 | (i) | Bar coating | 300 | 140 |
| Example | 37 | (i) | Bar coating | 300 | 140 |
| Example | 38 | (i) | Bar coating | 300 | 140 |
| Example | 39 | (i) | Bar coating | 300 | 140 |
| Example | 40 | (i) | Bar coating | 300 | 140 |
| Example | 41 | (i) | Bar coating | 300 | 140 |
| Example | 42 | (i) | Bar coating | 50 | 140 |
| Example | 43 | (i) | Bar coating | 100 | 140 |
| Example | 44 | (i) | Bar coating | 200 | 140 |
| Example | 45 | (i) | Bar coating | 400 | 140 |
| Example | 46 | (i) | Bar coating | 450 | 140 |
| Example | 47 | (i) | Bar coating | 500 | 140 |
| Example | 48 | (i) | Bar coating | 600 | 140 |
| Example | 49 | (i) | Bar coating | 800 | 140 |
| Example | 50 | (i) | Bar coating | 1000 | 140 |
| Example | 51 | (i) | Bar coating | 300 | 140 |
| Example | 52 | (i) | Bar coating | 300 | 140 |
| Example | 53 | (i) | Bar coating | 300 | 140 |
| Example | 54 | (i) | Bar coating | 300 | 140 |
| Example | 55 | (i) | Bar coating | 300 | 140 |
| Example | 56 | (i) | Bar coating | 300 | 140 |
| Example | 57 | (i) | Bar coating | 300 | 140 |
| Example | 58 | (i) | Bar coating | 300 | 140 |
| Example | 59 | (i) | Bar coating | 300 | 140 |
| Example | 60 | (i) | Bar coating | 300 | 40 |
| Example | 61 | (i) | Bar coating | 300 | 60 |
| Example | 62 | (i) | Bar coating | 300 | 60 |
| Example | 63 | (i) | Bar coating | 300 | 80 |
| Example | 64 | (i) | Bar coating | 300 | 180 |
| Example | 65 | (i) | Bar coating | 300 | 200 |
| Example | 66 | (i) | Bar coating | 300 | 250 |
| Example | 67 | (i) | Bar coating | 300 | 140 |
| Example | 68 | (i) | Bar coating | 300 | 140 |
| Example | 69 | (i) | Bar coating | 300 | 140 |
| Example | 70 | (i) | Bar coating | 300 | 140 |
| Example | 71 | (i) | Bar coating | 300 | 140 |
| Example | 72 | (i) | Bar coating | 300 | 140 |
| Example | 73 | (i) | Bar coating | 300 | 140 |
| Example | 74 | (i) | Bar coating | 300 | 140 |
| Example | 75 | (i) | Bar coating | 300 | 140 |
| Example | 76 | (i) | Bar coating | 300 | 140 |
| Example | 77 | (i) | Bar coating | 300 | 140 |
| Example | 78 | (i) | Bar coating | 600 | 140 |
| Example | 79 | (i) | Bar coating | 900 | 140 |
| Example | 80 | (i) | Bar coating | 1200 | 140 |
| Example | 81 | (i) | Bar coating | 300 | 140 |
| Comparative example | 82 | (i) | Bar coating | 300 | 140 |
| Comparative example | 83 | (i) | Bar coating | 300 | 140 |
| Comparative example | 84 | (i) | Bar coating | 300 | 140 |
| Comparative example | 85 | (i) | Bar coating | 300 | 140 |
| Comparative example | 86 | (i) | Bar coating | 300 | 140 |
| Comparative example | 87 | (i) | Bar coating | 300 | 140 |
| Comparative example | 88 | (i) | Bar coating | 300 | 140 |
| Comparative example | 89 | (i) | Bar coating | 300 | 140 |
| Comparative example | 90 | (i) | Bar coating | 300 | 140 |
| Comparative example | 91 | (i) | Bar coating | 300 | 140 |
| Comparative example | 92 | (i) | Bar coating | 300 | 140 |
| Comparative example | 93 | (i) | Bar coating | 300 | 140 |
| Comparative example | 94 | (i) | Bar coating | 10 | 140 |
| Comparative example | 95 | (i) | Bar coating | 1500 | 140 |
| Comparative example | 96 | (i) | Bar coating | 10 | 140 |
| Comparative example | 97 | (i) | Bar coating | 1500 | 140 |
| Comparative example | 98 | (i) | Bar coating | 300 | 140 |
| Comparative example | 99 | (i) | Bar coating | 300 | 140 |
| Comparative example | 100 | (i) | Bar coating | 300 | 140 |
| Comparative example | 101 | (i) | Bar coating | 300 | 140 |
| Comparative example | 102 | (i) | Bar coating | 300 | 140 |
| Comparative example | 103 | (i) | Bar coating | 300 | 140 |

### (5) Evaluation test methods

### (5-1) Evaluation of corrosion resistance

Specimens having a size of 70 mm x 150 mm were cut from test sheets and the back surfaces and end surfaces of the specimens were sealed with vinyl tapes. These specimens were tested in a manner described below. The evaluation was performed by visually determining area percentage of rust. Salt spray testing (SST: in compliance with JIS-Z-2371-2000): The evaluation was performed with the following evaluation criteria on the basis of the area percentage of white rust after a lapse of 120 hours from SST by visual inspection.

### Evaluation criteria:

Excellent: white-rust area percentage of less than 5%
Good: white-rust area percentage of 5% or more and less than 20%
Fair: white-rust area percentage of 20% or more and less than 40%
Poor: white-rust area percentage of 40% or more

### (5-2) Evaluation of overpaintability (adhesion)

Specimens having the same size as that of the above-described specimens were painted with a commercially available melamine alkyd paint and baked at 140°C for 30 minutes such that the resultant painted film had a thickness of 30 µm. After that, the specimens were immersed in boiling water for 2 hours and a surface of each specimen was then cut in a pattern of 100 squares having 1 mm sides with an NT cutter to such a depth as to reach the base steel. The specimen was subjected to cupping by 5 mm with an Erichsen tester such that the cut portion was on the outer (front) side. A tape was removed from the painted film and the remaining state of the painted film was evaluated in a manner below. The Erichsen cupping conditions were compliance with JIS-Z-2247-2006 (Erichsen value symbol: IE) and the punch diameter was 20 mm, the die diameter was 27 mm, and the drawing width was 27 mm.

### Evaluation criteria:

Excellent: delamination area of less than 5% and no delamination
Good: delamination area of less than 10% and 5% or more
Fair: delamination area of less than 20% and 10% or more
Poor: delamination area of 20% or more

### (5-3) Evaluation of continuity

Each test sheet was evaluated by measuring surface resistivity thereof with an ESP probe of a Loresta GP manufactured by Mitsubishi Chemical Analytech Co., Ltd. Surface resistivity was measured every time when the load on the probe was increased by 50 g and the evaluation was performed on the basis of the minimum load under which 10⁻⁴ Ω or less was achieved.
Excellent: average load of 10-point measurement was less than 250 g
Very good: average load of 10-point measurement was 250 g or more and less than 500 g
Good: average load of 10-point measurement was 500 g or more and less than 750 g
Fair: average load of 10-point measurement was 750 g or more and less than 950 g
Poor: average load of 10-point measurement was 950 g or more

### (5-4) Evaluation of storage stability

The surface-treatment agents having compositions described in Table 1 were stored in a constant temperature chamber at 40°C for 30 days. The appearance of the surface-treatment agents was evaluated by visual inspection.
Excellent: no change
Good: very small amount of precipitation
Fair: small amount of precipitation or an increase in viscosity to some extent
Poor: large amount of precipitation or gelation

### (5-5) Evaluation of lubricity

A disc-shaped specimen having a diameter of 100 mm was cut from each surface-treated test sheet and formed into a cup under conditions: a punch diameter of 50 mm, a die diameter of 51.91 mm, and a blank holding force of 1 ton. The appearance of the drawn surface of the formed product (side surface of the cup) was visually inspected and was evaluated in terms of how scratched it was and how blackened it was. The following evaluation criteria were used. Excellent: almost no change over the entire surface, uniform appearance
Good: slightly scratched and blackened and clearly nonuniform appearance
Fair: severely scratched and blackened mainly in corner portions
Poor: cracked and the forming was not achieved

The results of the evaluations (5-1) to (5-4) in terms of the zinc or zinc alloy coated steel sheets obtained with the surface-treatment agents described in Examples 1 to 81 and Comparative examples 82 to 103 are described in Table 3.

Note that, in Comparative examples 89 and 101, the treatment solutions were unstable and films were not formed. Thus, the evaluations were not performed.

**[Table 3 (No.1)]**

| Test condition | | Corrosion resistance | Adhesion | Continuity | Storage stability | Lubricity |
|---|---|---|---|---|---|---|
| Example | 1 | Good | Excellent | Excellent | Excellent | Good |
| Example | 2 | Excellent | Excellent | Excellent | Excellent | Good |
| Example | 3 | Excellent | Excellent | Excellent | Excellent | Good |
| Example | 4 | Excellent | Excellent | Excellent | Excellent | Good |
| Example | 5 | Excellent | Excellent | Excellent | Excellent | Good |
| Example | 6 | Excellent | Excellent | Excellent | Excellent | Good |
| Example | 7 | Excellent | Excellent | Excellent | Excellent | Good |
| Example | 8 | Excellent | Excellent | Very good | Excellent | Good |
| Example | 9 | Good | Excellent | Excellent | Excellent | Good |
| Example | 10 | Excellent | Excellent | Excellent | Excellent | Good |
| Example | 11 | Excellent | Excellent | Excellent | Excellent | Good |
| Example | 12 | Excellent | Excellent | Excellent | Excellent | Good |
| Example | 13 | Excellent | Excellent | Excellent | Excellent | Good |
| Example | 14 | Excellent | Excellent | Excellent | Excellent | Good |
| Example | 15 | Excellent | Excellent | Excellent | Excellent | Good |
| Example | 16 | Excellent | Excellent | Excellent | Excellent | Good |
| Example | 17 | Excellent | Excellent | Excellent | Excellent | Good |
| Example | 18 | Excellent | Excellent | Excellent | Excellent | Good |
| Example | 19 | Excellent | Excellent | Excellent | Excellent | Good |
| Example | 20 | Excellent | Excellent | Excellent | Excellent | Good |
| Example | 21 | Excellent | Excellent | Excellent | Excellent | Good |
| Example | 22 | Good | Good | Excellent | Excellent | Good |
| Example | 23 | Excellent | Excellent | Excellent | Excellent | Good |
| Example | 24 | Excellent | Excellent | Excellent | Excellent | Good |
| Example | 25 | Good | Excellent | Very good | Excellent | Good |
| Example | 26 | Excellent | Excellent | Excellent | Excellent | Good |
| Example | 27 | Excellent | Good | Excellent | Excellent | Good |
| Example | 28 | Good | Excellent | Excellent | Excellent | Good |
| Example | 29 | Excellent | Excellent | Excellent | Excellent | Good |
| Example | 30 | Excellent | Excellent | Excellent | Excellent | Good |
| Example | 31 | Excellent | Excellent | Excellent | Excellent | Good |
| Example | 32 | Excellent | Excellent | Excellent | Excellent | Good |
| Example | 33 | Excellent | Excellent | Excellent | Excellent | Good |
| Example | 34 | Excellent | Excellent | Excellent | Excellent | Good |
| Example | 35 | Excellent | Excellent | Excellent | Excellent | Good |
| Example | 36 | Excellent | Excellent | Excellent | Excellent | Good |
| Example | 37 | Excellent | Excellent | Excellent | Excellent | Good |
| Example | 38 | Excellent | Excellent | Excellent | Excellent | Good |
| Example | 39 | Excellent | Excellent | Excellent | Excellent | Good |
| Example | 40 | Good | Excellent | Excellent | Excellent | Good |
| Example | 41 | Excellent | Excellent | Excellent | Excellent | Good |
| Example | 42 | Good | Excellent | Excellent | Excellent | Good |
| Example | 43 | Excellent | Excellent | Excellent | Excellent | Good |
| Example | 44 | Excellent | Excellent | Excellent | Excellent | Good |
| Example | 45 | Excellent | Excellent | Excellent | Excellent | Good |
| Example | 46 | Excellent | Excellent | Excellent | Excellent | Good |
| Example | 47 | Excellent | Excellent | Excellent | Excellent | Good |
| Example | 48 | Excellent | Excellent | Very good | Excellent | Good |
| Example | 49 | Excellent | Good | Very good | Excellent | Good |
| Example | 50 | Excellent | Good | Good | Excellent | Good |
| Example | 51 | Good | Excellent | Excellent | Excellent | Good |
| Example | 52 | Excellent | Excellent | Excellent | Excellent | Good |
| Example | 53 | Excellent | Excellent | Excellent | Excellent | Good |
| Example | 54 | Excellent | Excellent | Excellent | Excellent | Good |
| Example | 55 | Good | Excellent | Excellent | Excellent | Good |
| Example | 56 | Excellent | Excellent | Excellent | Excellent | Good |
| Example | 57 | Excellent | Excellent | Excellent | Excellent | Good |
| Example | 58 | Excellent | Excellent | Very good | Excellent | Good |
| Example | 59 | Excellent | Excellent | Excellent | Excellent | Good |
| Example | 60 | Fair | Excellent | Excellent | Excellent | Good |
| Example | 61 | Excellent | Excellent | Excellent | Excellent | Good |
| Example | 62 | Good | Excellent | Excellent | Excellent | Good |
| Example | 63 | Excellent | Excellent | Excellent | Excellent | Good |
| Example | 64 | Excellent | Excellent | Excellent | Excellent | Good |
| Example | 65 | Good | Excellent | Excellent | Excellent | Good |
| Example | 66 | Fair | Excellent | Good | Excellent | Good |
| Example | 67 | Excellent | Excellent | Excellent | Excellent | Good |
| Example | 68 | Excellent | Excellent | Excellent | Excellent | Good |
| Example | 69 | Good | Excellent | Excellent | Excellent | Good |
| Example | 70 | Good | Excellent | Fair | Excellent | Excellent |
| Example | 71 | Excellent | Excellent | Excellent | Excellent | Good |
| Example | 72 | Excellent | Excellent | Excellent | Excellent | Good |
| Example | 73 | Excellent | Excellent | Excellent | Excellent | Good |
| Example | 74 | Good | Excellent | Excellent | Excellent | Good |
| Example | 75 | Fair | Excellent | Very good | Excellent | Excellent |
| Example | 76 | Excellent | Excellent | Excellent | Excellent | Excellent |
| Example | 77 | Excellent | Excellent | Excellent | Excellent | Excellent |
| Example | 78 | Excellent | Excellent | Very good | Excellent | Excellent |
| Example | 79 | Excellent | Good | Good | Excellent | Excellent |
| Example | 80 | Excellent | Good | Fair | Excellent | Excellent |
| Example | 81 | Good | Excellent | Very good | Good | Excellent |
| Comparative example | 82 | Poor | Fair | Very good | Good | Good |
| Comparative example | 83 | Good | Fair | Poor | Good | Fair |
| Comparative example | 84 | Poor | Fair | Poor | Excellent | Poor |
| Comparative example | 85 | Fair | Poor | Very good | Fair | Fair |
| Comparative example | 86 | Poor | Fair | Very good | Fair | Good |
| Comparative example | 87 | Poor | Fair | Very good | Fair | Good |
| Comparative example | 88 | Poor | Fair | Very good | Excellent | Poor |
| Comparative example | 89 | - | - | - | Poor | - |
| Comparative example | 90 | Poor | Fair | Very good | Excellent | Good |
| Comparative example | 91 | Good | Fair | Poor | Fair | Good |
| Comparative example | 92 | Poor | Poor | Poor | Excellent | Good |
| Comparative example | 93 | Poor | Poor | Poor | Excellent | Good |
| Comparative example | 94 | Poor | Good | Excellent | Excellent | Poor |
| Comparative example | 95 | Excellent | Fair | Poor | Excellent | Good |
| Comparative example | 96 | Poor | Good | Excellent | Excellent | Fair |
| Comparative example | 97 | Excellent | Fair | Poor | Excellent | Excellent |
| Comparative example | 98 | Poor | Fair | Fair | Fair | Good |
| Comparative example | 99 | Poor | Fair | Fair | Excellent | Good |
| Comparative example | 100 | Poor | Poor | Good | Fair | Poor |
| Comparative example | 101 | - | - | - | Poor | - |
| Comparative example | 102 | Poor | Fair | Fair | Excellent | Good |
| Comparative example | 103 | Poor | Fair | Fair | Good | Good |

As described in Table 3, zinc or zinc alloy coated steel sheets according to the present invention can be provided, the zinc or zinc alloy coated steel sheets having various properties such as corrosion resistance and adhesion and allowing for excellent continuity under a condition in which the steel sheets are in contact with gaskets or the like at a low contact pressure. Zinc or zinc alloy coated steel sheets allowing for excellent continuity according to the present invention have films completely free from regulated substances causing pollution such as hexavalent chromium and hence are optimal as zinc or zinc alloy coated steel sheets used for parts of automobiles, household electrical appliances, and OA equipment.

### [Industrial Applicability]

A zinc or zinc alloy coated steel sheet can be provided that has a film completely free from regulated substances causing pollution such as hexavalent chromium, has various properties such as corrosion resistance and adhesion, and allows for excellent continuity without degrading corrosion resistance even under a severe condition in which the steel sheet is in contact with a gasket or the like at a low contact pressure.

## Claims

1. A zinc or zinc alloy coated steel sheet comprising a surface-treatment film having a coating weight of 50 to 1200 mg/m² relative to a surface of the zinc or zinc alloy coated steel sheet, wherein the surface-treatment film is obtained by applying a surface-treatment agent to the surface of the zinc or zinc alloy coated steel sheet and drying the surface-treatment agent by heating; and the surface-treatment agent is prepared so as to contain a water-soluble zirconium compound (A), a tetraalkoxysilane (B), an epoxy-group-containing compound (C), a chelating agent (D), a vanadate compound (E), and a metal compound (F) containing one or more metals selected from the group consisting of Ti, Al, and Zn, to have a pH of 8 to 10, and to satisfy conditions (I) to (V) below,
Note
(I) a ratio (A/B) of a mass of the water-soluble zirconium compound (A) in terms of Zr to a mass of the tetraalkoxysilane (B) is 1.0 to 6.0;
(II) a ratio (B/C) of the mass of the tetraalkoxysilane (B) to a mass of the epoxy-group-containing compound (C) is 0.1 to 1.6;
(III) a ratio (B/D) of the mass of the tetraalkoxysilane (B) to a mass of the chelating agent (D) is 0.3 to 2.0;
(IV) a ratio (E/D) of a mass of the vanadate compound (E) in terms of V to the mass of the chelating agent (D) is 0.03 to 1.0; and
(V) a ratio (F/D) of a total metal mass of the metal compound (F) to the mass of the chelating agent (D) is 0.05 to 0.8.

2. The zinc or zinc alloy coated steel sheet according to Claim 1, wherein the coating weight relative to the surface is 50 to 500 mg/m².

3. The zinc or zinc alloy coated steel sheet according to Claim 1 or 2, wherein the surface-treatment agent further contains a lubricant (G) and a content of the lubricant (G) is 1 to 10 mass% relative to a total solid content of the surface-treatment agent.

4. The zinc or zinc alloy coated steel sheet according to any one of Claims 1 to 3, wherein the surface-treatment agent further contains a nonionic acrylic resin emulsion (H) and a content of the nonionic acrylic resin emulsion (H) is 0.5 to 45.0 mass% relative to a total solid content of the surface-treatment agent.

5. The zinc or zinc alloy coated steel sheet according to Claim 4, wherein the content of the nonionic acrylic resin emulsion (H) is 0.5 to 4.5 mass% relative to the total solid content of the surface-treatment agent.

## Patentansprüche

1. Mit Zink oder einer Zinklegierung beschichtetes Stahlblech, umfassend einen Oberflächenbehandlungsfilm mit einem Beschichtungsgewicht von 50 bis 1.200 mg/m², bezogen auf eine Oberfläche des mit Zink oder einer Zinklegierung beschichteten Stahlblechs, wobei der Oberflächenbehandlungsfilm durch Aufbringen eines Oberflächenbehandlungsmittels auf die Oberfläche des mit Zink oder der Zinklegierung beschichteten Stahlblechs und Trocknen des Oberflächenbehandlungsmittels durch Erhitzen erzielt wird; und das Oberflächenbehandlungsmittel so hergestellt wird, dass es eine wasserlösliche Zirkoniumverbindung (A), ein Tetraalkoxysilan (B), eine Epoxygruppen enthaltende Verbindung (C), einen Chelatbildner (D), eine Vanadatverbindung (E) und eine Metallverbindung (F) umfasst, die ein oder mehrere Metalle umfasst, die aus der Gruppe bestehend aus Ti, Al und Zn gewählt sind, um einen pH-Wert von 8 bis 10 zu haben und die Bedingungen (I) bis (V) unten zu erfüllen,
Hinweis
(I) ein Verhältnis (A/B) einer Masse der wasserlöslichen Zirkoniumverbindung (A) in Form von Zr zu einer Masse des Tetraalkoxysilans (B) beträgt 1,0 bis 6,0;
(II) ein Verhältnis (B/C) der Masse des Tetraalkoxysilans (B) zu einer Masse der Epoxygruppen enthaltenden Verbindung (C) beträgt 0,1 bis 1,6;
(III) ein Verhältnis (B / D) der Masse des Tetraalkoxysilans (B) zu einer Masse des Chelatbildners (D) beträgt 0,3 bis 2,0;
(IV) ein Verhältnis (E/D) einer Masse der Vanadatverbindung (E) in Form von V zu der Masse des Chelatbildners (D) beträgt 0,03 bis 1,0; und
(V) ein Verhältnis (F/D) einer Gesamtmetallmasse der Metallverbindung (F) zur Masse des Chelatbildners (D) beträgt 0,05 bis 0,8.

2. Mit Zink oder einer Zinklegierung beschichtetes Stahlblech nach Anspruch 1, bei der das Beschichtungsgewicht bezogen auf die Oberfläche 50 bis 500 mg/m² beträgt.

3. Mit Zink oder einer Zinklegierung beschichtetes Stahlblech nach Anspruch 1 oder 2, bei der das Oberflächenbehandlungsmittel ferner ein Schmiermittel (G) enthält und der Gehalt des Schmiermittels (G) 1 bis 10 Massen-%, bezogen auf den Gesamtfeststoffgehalt des Oberflächenbehandlungsmittels beträgt.

4. Mit Zink oder einer Zinklegierung beschichtetes Stahlblech nach einem der Ansprüche 1 bis 3, bei dem das Oberflächenbehandlungsmittel ferner eine nichtionische Acrylharzemulsion (H) umfasst und der Gehalt der nichtionischen Acrylharzemulsion (H) 0,5 bis 45,0 Massen-% bezogen auf einen Gesamtfeststoffgehalt des Oberflächenbehandlungsmittels beträgt.

5. Mit Zink oder einer Zinklegierung beschichtetes Stahlblech nach Anspruch 4, bei dem der Gehalt der nichtionischen Acrylharzemulsion (H) 0,5 bis 4,5 Massen-%, bezogen auf den Gesamtfeststoffgehalt des Oberflächenbehandlungsmittels beträgt.

## Revendications

1. Tôle d'acier revêtue de zinc ou d'alliage de zinc comprenant un film de traitement de surface ayant un poids de revêtement de 50 à 1 200 mg/m² par rapport à une surface de la tôle d'acier revêtue de zinc ou d'alliage de zinc, le film de traitement de surface étant obtenu par application d'un agent de traitement de surface sur la surface de la tôle d'acier revêtue de zinc ou d'alliage de zinc et séchage de l'agent de traitement de surface par chauffage ; et l'agent de traitement de surface étant préparé de façon à contenir un composé de zirconium hydrosoluble (A), un tétraalcoxysilane (B), un composé contenant un groupe époxy (C), un agent chélatant (D), un composé vanadate (E) et un composé métallique (F) contenant un ou plusieurs métaux choisis dans le groupe constitué de Ti, Al et Zn, pour avoir un pH de 8 à 10, et pour satisfaire les conditions (I) à (V) ci-dessous,
Note
(I) un rapport (A/B) d'une masse du composé de zirconium hydrosoluble (A) en termes de Zr sur une masse du tétraalcoxysilane (B) va de 1,0 à 6,0 ;
(II) un rapport (B/C) de la masse du tétraalcoxysilane (B) sur une masse du composé contenant un groupe époxy (C) va de 0,1 à 1,6 ;
(III) un rapport (B/D) de la masse du tétraalcoxysilane (B) sur une masse de l'agent chélatant (D) va de 0,3 à 2,0 ;
(IV) un rapport (E/D) d'une masse du composé vanadate (E) en termes de V sur la masse de l'agent chélatant (D) va de 0,03 à 1,0 ; et
(V) un rapport (F/D) d'une masse de métal totale du composé métallique (F) sur la masse de l'agent chélatant (D) va de 0,05 à 0,8.

2. Tôle d'acier revêtue de zinc ou d'alliage de zinc selon la revendication 1, le poids de revêtement par rapport à la surface allant de 50 à 500 mg/m².

3. Tôle d'acier revêtue de zinc ou d'alliage de zinc selon la revendication 1 ou 2, l'agent de traitement de surface contenant en outre un lubrifiant (G) et une teneur du lubrifiant (G) allant de 1 à 10 % en masse par rapport à une teneur en solides totale de l'agent de traitement de surface.

4. Tôle d'acier revêtue de zinc ou d'alliage de zinc selon l'une quelconque des revendications 1 à 3, l'agent de traitement de surface contenant en outre une émulsion de résine acrylique non ionique (H) et une teneur de l'émulsion de résine acrylique non ionique (H) allant de 0,5 à 45,0 % en masse par rapport à une teneur en solides totale de l'agent de traitement de surface.

5. Tôle d'acier revêtue de zinc ou d'alliage de zinc selon la revendication 4, la teneur de l'émulsion de résine acrylique non ionique (H) allant de 0,5 à 4,5 % en masse par rapport à la teneur en solides totale de l'agent de traitement de surface.
